(19) Europäisches Patentamt
European Patent Office
Office européen des brevets

(11) **EP 2 495 984 A1**

(12) **EUROPEAN PATENT APPLICATION**
published in accordance with Art. 153(4) EPC

(43) Date of publication:
**05.09.2012 Bulletin 2012/36**

(21) Application number: **10855122.7**

(22) Date of filing: **22.11.2010**

(51) Int Cl.:
*H04N 13/04* (2006.01)    *G02B 27/22* (2006.01)
*G09G 5/00* (2006.01)

(86) International application number:
**PCT/JP2010/070815**

(87) International publication number:
**WO 2012/070103 (31.05.2012 Gazette 2012/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Kabushiki Kaisha Toshiba, Inc.**
**Tokyo 105-8001 (JP)**

(72) Inventors:
• **SHIMOYAMA, Kenichi**
**Minato-ku,**
**Tokyo 105-8001 (JP)**
• **MITA, Takeshi**
**Minato-ku,**
**Tokyo 105-8001 (JP)**
• **BABA, Masahiro**
**Minato-ku,**
**Tokyo 105-8001 (JP)**

• **HIRAI, Ryusuke**
**Minato-ku,**
**Tokyo 105-8001 (JP)**
• **FUKUSHIMA, Rieko**
**Minato-ku,**
**Tokyo 105-8001 (JP)**
• **KOKOJIMA, Yoshiyuki**
**Minato-ku,**
**Tokyo 105-8001 (JP)**

(74) Representative: **Granleese, Rhian Jane**
**Marks & Clerk LLP**
**90 Long Acre**
**London**
**WC2E 9RA (GB)**

(54) **METHOD AND DEVICE FOR DISPLAYING STEREOSCOPIC IMAGE**

(57)    According to an embodiment, an apparatus for displaying a stereoscopic image is provided. In the apparatus, a person data acquiring unit acquires person data including a position of each of persons who are viewing a stereoscopic image, a weight calculating unit calculates a weight from the person data and display parameters, the weight representing a stereoscopic degree inferred, for each of the persons, from a multi-viewpoint image displayed in accordance with the display parameters, an image determining unit selects the display parameter that maximizes a total sum of the weights calculated of the persons and outputs a multi-viewpoint image that accords with the display parameters selected, and an image displaying unit displays the multi-viewpoint image output from the image determining unit.

F I G. 1

EP 2 495 984 A1

**Description**

Technical Field

An embodiment of this invention relates to an apparatus and method for displaying stereoscopic images.

Background Art

Any stereoscopic image display apparatus, with which no dedicated eyeglasses are used, has a limited display field (hereinafter called "view region") in which a stereoscopic image can be seen. The viewers may hardly see a stereoscopic image, depending on their positions with respect to the stereoscopic image display apparatus. Even if a viewer first stays in the view region, he or she may move from the view region. In view of this, it is desirable to change the mode of displaying the stereoscopic image in accordance with the viewer's position, so that the viewer may see the stereoscopic image.

Citation List

Patent Literature 1: Jpn. Pat. Appln. KOKAI Publication No. 8-328170

Summary of Invention

Technical Problem

Several viewers may be viewing a stereoscopic image. In this case, too, it is desirable to change the mode of displaying the stereoscopic image so that all viewers may see the stereoscopic image.

Solution To Problem

An embodiment provides a stereoscopic image displaying apparatus is configured to display a multi-viewpoint image. In the apparatus, a person data acquiring unit acquires person data including a position of each of persons who are viewing a stereoscopic image, a weight calculating unit calculates a weight from the person data and display parameters, the weight representing a stereoscopic degree inferred, for each of the persons, from a multi-viewpoint image displayed in accordance with the display parameters, an image determining unit selects the display parameter that maximizes a total sum of the weights calculated of the persons and outputs a multi-viewpoint image that accords with the display parameters selected, and an image displaying unit displays the multi-viewpoint image output from the image determining unit.

Brief Description of the Drawings

FIG. 1 is a block diagram of a stereoscopic image display apparatus according to an embodiment;
FIG. 2 is a perspective view schematically showing an exemplary configuration of the image displaying unit;
FIG. 3 is a block diagram schematically showing the configurations of the weight calculating unit and image determining unit;
FIG. 4 is a block diagram showing the configuration of the person data acquiring unit;
FIG. 5 is a block diagram showing the configuration of the weight calculating unit;
FIG. 6 is a diagram explaining how a weight is calculated from the area of a region that can be seen as a stereoscopic image;
FIG. 7 is a diagram explaining how a weight is calculated from the density of light beams;
FIG. 8 is a diagram showing an exemplary weight map calculated by the weight calculating unit;
FIG. 9 is a block diagram showing the configuration of the image determining unit;
FIG. 10 is a diagram explaining the display parameters to be controlled for the view region;
FIG. 11 is a diagram explaining the display parameters to be controlled for the view region;
FIG. 12 is a diagram explaining an adjacent view region;
FIG. 13 is a diagram explaining how a control is performed in accordance with a pixel arrangement (pixel pitch);

FIG. 14 is a diagram explaining how the view region is controlled by moving, rotating or deforming the image displaying unit; and

FIG. 15 is a diagram explaining the density of light beams, which changes in accordance with the parallax number.

Description of Embodiments

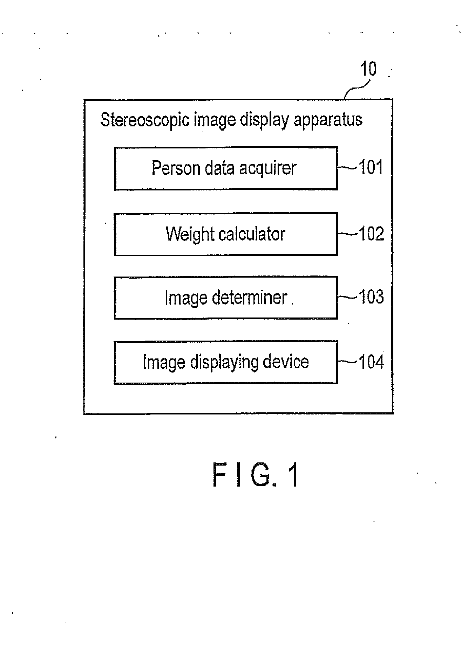

As shown in FIG. 1, a stereoscopic image display apparatus 10 according to an embodiment comprises a person data acquiring unit 101, a weight calculating unit 102, an image determining unit 103, and an image displaying unit 104. The apparatus 10 can change the mode of displaying a stereoscopic image in accordance with the positions of viewers and can enable, for example, several viewers to see a good stereoscopic image at the same time. The person data acquiring unit 101 detects the positions of the viewers (hereinafter called "persons") who are viewing the stereoscopic image the stereoscopic image display apparatus 10 displays. This embodiment can cope with the case where several persons view an image, and can detect the position of each of these persons. The person data acquiring unit 101 outputs the person data representing the position detected of each person. A detecting unit, such as a camera, may detect the position of a person i, thus finding the coordinates (hereinafter referred to as "position coordinates Xi, Yi") of the position that the person assumes with respect to the stereoscopic image display apparatus 10. The weight calculating unit 102 calculates a weight representing the stereoscopic degree for each person, from the person data acquired by the person data acquiring unit 101 and including the position of the person. The image determining unit 103 selects the display parameters at which the sum of weights the weight calculating unit 102 has calculated for each person is maximal, and outputs the multi-viewpoint image that accords with the display parameters selected. The image displaying unit 104 displays the multi-viewpoint image output from the image determining unit 103.

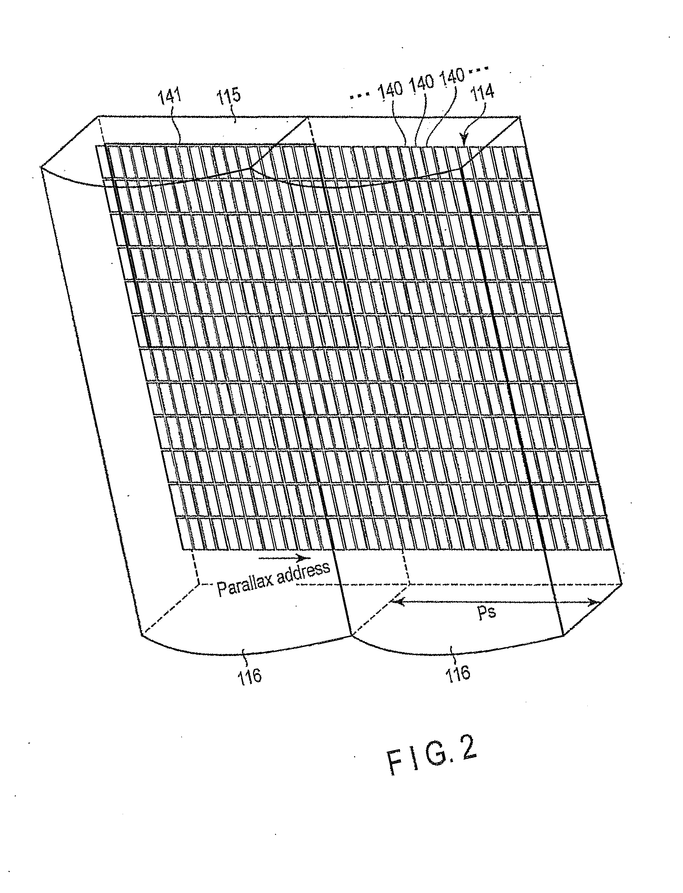

The image displaying unit 104 is a device configured to display the multi-viewpoint image generated by the image determining unit 103. FIG. 2 is a perspective view schematically showing an exemplary configuration of the image displaying unit 104. Assume that 18 viewpoints exist, that is, n = 18. As shown in FIG. 2, the image displaying unit 104 comprises a display element array 114 and an aperture control unit 115 arranged in front of the display element array 114. A liquid crystal display (LCD) may be used as the display element array 114.

The aperture control unit 115 is a light-beam control element that controls the light beams being transmitted and guides the light beams in a prescribed direction. As shown in FIG. 2, a lenticular sheet may be used as the aperture control unit 115. The lenticular sheet is an array plate of lens segments, which controls the input light beams and output light beams, guiding them in a prescribed direction. Alternatively, an array plate having slits, i.e., light-transmitting regions, can be used as the aperture control unit 115. These light-transmitting regions and lens segments have a function of emitting those of the light beams emerging forwards from the display element array 114, which propagate in a specific direction. Hereinafter, the lens segments and the light-transmitting regions will be collectively referred to as "optical aperture unit."

As the aperture control unit 115, a lenticular sheet is used, which is a lens array used in the display element array 114, each lens having a genetratrix extending perpendicular to the screen. The optical apertures 116, 116, ... of the respective lens segments are arranged in association with pixels. The aperture control unit 115 is not limited to such a lenticular lens sheet as described above or an array plate composed of light-transmitting regions. Instead, an LCD can be used as a light shutter that can change the position and shape of each light-transmitting region.

In any FPD of the ordinary type, one pixel is composed of sub-pixels for red, green and blue (RGB), respectively. Assume that one display pixel corresponds to one sub-pixel. In the case shown in FIG. 2, the display element array 114 has display pixels (sub-pixels 140, 141, ...) arranged in the form of a matrix, each having an aspect ratio of 3:1 so that the pixel may be shaped like a square. Each sub-pixel emits red (R) light, green (G) light or blue (B) light. With respect to the row direction, an image defined by sub-pixels arranged in the row direction, in the number associated with parallax, i.e., a set of parallax images represented by the sub-pixels associated with the exit pupil (i.e., optical aperture 116), shall be called "element image." Note that the sub-pixels are not limited to those for red, green and blue (RGB).

With respect to the column direction, the element image is composed of six sub-pixels arranged in the column direction. That is, one element image 141 is defined by 18 pixels arranged in the row direction and six pixels arranged in the column direction (as indicated by a frame in FIG. 2). As seen from FIG. 2, a stereoscopic image can be displayed, which achieves 18 parallaxes in the horizontal direction, and the element image, i.e., pixels defining the stereoscopic image, becomes square because the six pixels are arranged in the column direction. The position any pixel assumes in one valid pixel in the horizontal direction corresponds to the aperture control unit 115, and is correlated to the angle at which a light beam is emitted. The address representing the direction of the light beam shall be called "parallax address." The parallax address corresponds to the position the pixel assumes, in one valid pixel, with respect to the horizontal direction. The parallax address gradually increases toward the right edge of the screen.

In the aperture control unit 115, the optical apertures 116, 916, ... are arranged at the element images, respectively. In the case shown in FIG. 2, the width Ps (lens pitch) of any optical aperture 116 is equal to the width of one element image.

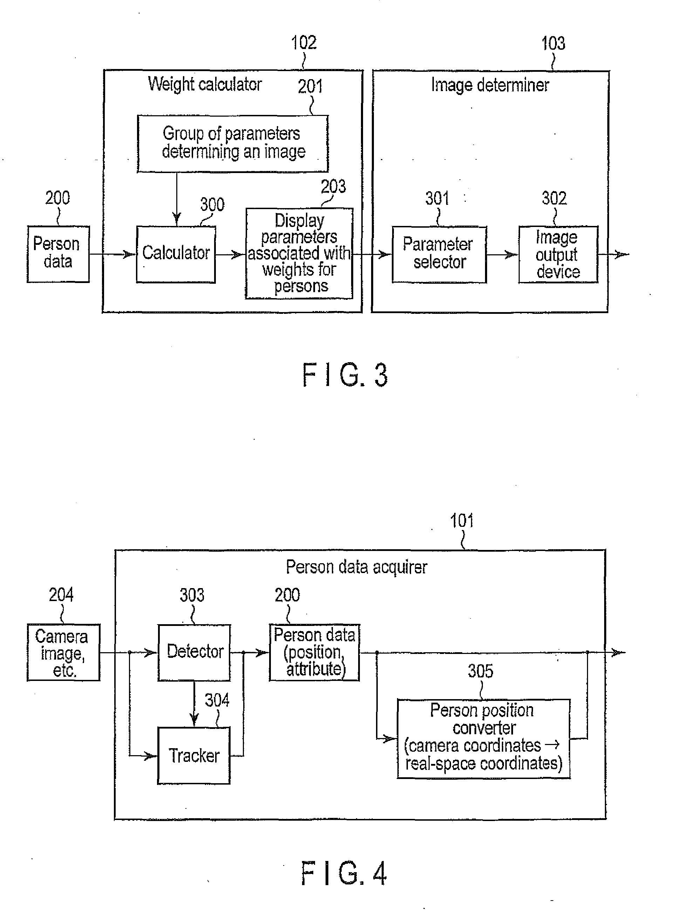

FIG. 3 schematically shows the configurations of the weight calculating unit 102 and image determining unit 103. The weight calculating unit 102 has a calculating unit 300. The calculating unit 300 receives the person data 200 containing the data acquired by the person data acquiring unit 101 and representing the position of each person, and also receives parameters for determining images. The calculating unit 300 calculates the weight representing the stereoscopic degree for each person and outputs the weight about the person and the display parameter 203 associated with the weight.

The weight W representing the stereoscopic degree has been calculated from the person data 200 for the multi-viewpoint image (i.e., combination of pixels) to display at the image display apparatus 10 and for the display parameters 201 related to the hardware design of the image display apparatus 10. The greater the weight W, the better will be the quality of the resultant stereoscopic image. The weight W, which is based at least on the position of each person, may be changed in any manner. For example, it may be changed in accordance with any one of the viewing modes the viewer has selected. The objects that can be controlled in accordance with the display parameters, such as the arrangement of pixels to display, will be described later in detail.

In this embodiment, the weight (called "position weight") is calculated, which accords with the area of stereoscopic display, the density of light beams and the position designated. The position data about each person should therefore be acquired by any means. In this embodiment, a weight associated with the attribute of each person (hereinafter referred to as "attribute weight") is calculated in addition to the position weight. The value of the position weight and that of the attribute weight are synthesized, generating the weight W.

The image determining unit 103 comprises a parameter selecting unit 301 and an image output unit 302. The parameter selecting unit 301 receives the weight of each person and the display parameter 203 associated with this weight, and selects a display parameter that maximizes the total sum of the weights of persons, which the weight calculating unit 102 has calculated. The image output unit 302 outputs the multi-viewpoint image that accords with the display parameter selected by the parameter selecting unit 301.

An exemplary configuration of the image display apparatus 10 according to this embodiment will be described in more detail.

Fig. 4 shows the configuration of the person data acquiring unit 101. The person data acquiring unit 101 comprises a detecting unit 303 and a tracking unit 304. The detecting unit 303 receives a camera image 204 or the like, detects the position of each person, and outputs the person data 200 representing the position and attribute of each person. The tracking unit 304 detects the change in the position of the same person for a prescribed time, from the output of the detecting unit 303. That is, the tracking unit 304 tracks each person moving.

The image used to detect the position is not limited to an image coming from a camera. A signal provided from, for example, radar may be used instead. Any object that can be recognized as pertaining to a person, e.g., face, head, entire person or marker, may be detected in order to detect the position. As the attribute of each person, the name, child/adult distinction, viewing time, remote controller ownership, or the like can be exemplified. The attribute is detected by any means or by may be explicitly input by the viewer or someone else.

The person data acquiring unit 101 may further comprise a person position converting unit 305 configured to convert the position data about each person, to a coordinate value. The person position converting unit 305 may be provided not in the person data acquiring unit 101, but in the weight calculating unit 102.

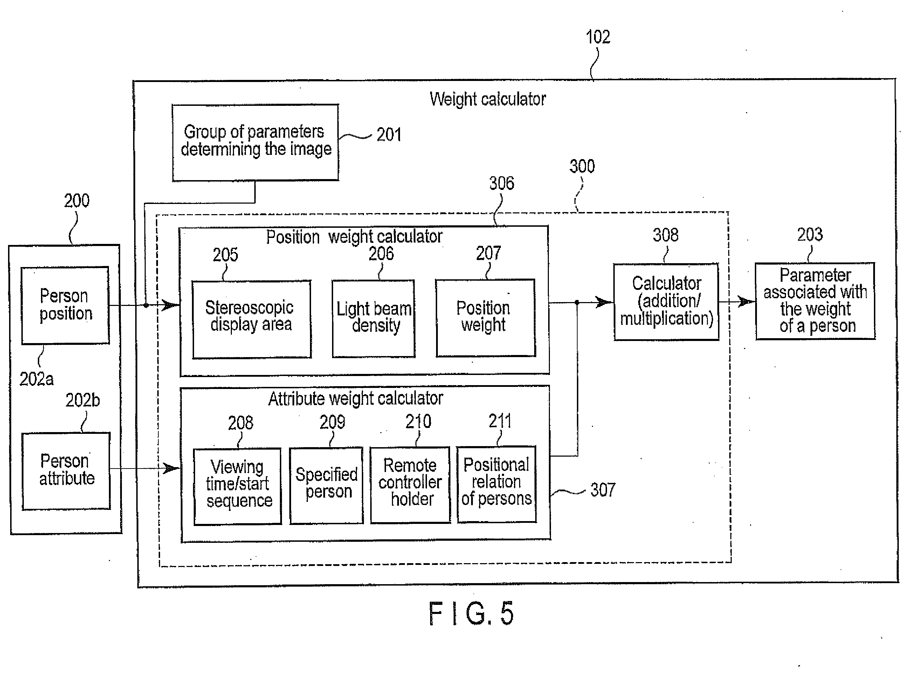

FIG. 5 shows the configuration of the weight calculating unit 102. The weight calculating unit 102 comprises the calculating unit 300. The calculating unit 300 receives the person data 200 and a parameter group that determines an image and calculates and outputs the weight of each person and the display parameter 203 associated with this weight. The calculating unit 300 comprises a position weight calculating unit 306, an attribute weight calculating unit 307, and a calculating unit 308. The position weight calculating unit 306 calculates a position weight from the parameter group that determines the person position 204 and the image. The attribute weight calculating unit 307 calculates an attribute weight from the person attribute 205. The calculating unit 308 calculates the sum or product of the position weight and the attribute weight, so calculated. If only the position weight or the attribute weight is utilized, the sum or product of these weights need not be calculated.

The position weight calculating unit 306 calculates the position weight from stereoscopic display area 205, light beam density 206 and position weight 207 designated. The stereoscopic display area 205 is determined from the position of each person (i.e., position relative to the display screen of the image display apparatus 10) and the multi-viewpoint image. The larger this area, the greater the position weight will be. Further, the light beam density 206 is determined from the distance from the display screen of the image display apparatus 10 and the number of viewpoints. The higher the light beam density 206, the greater the position weight will become. For the position weight 207 designated, a greater weight is assigned to the usual viewing position than to any other positions. The position weight calculating unit 306 calculates the sum or product of the weights calculated for the stereoscopic display area 205, light beam density 206 and position weight 207, and outputs the sum or product. Only one of these weights may be utilized. In this case, the sum or product of these weights need not be calculated. Moreover, any other item that can represent a weight pertaining to a "viewed state" may be added.

The attribute weight calculating unit 307 calculates the attribute weight from attribute values such as the viewing time or a start sequence 208 and a specified person 209, the remote controller holder 210 and the positional relation 211 of the persons. Higher weights are assigned to the viewing time and start sequence 208 so that any person who has been viewing for a long time or has started viewing before anyone else may have priority. Similarly, the weight for the specified person 209 or holder 210 of the remote controller is increased so that the specified person 209 or holder 210 may have priority. As for the positional relation 211, a person sitting in front of the display or near the display has a greater weight than any other persons. The attribute weight calculating unit 307 finds the sum or product of the weights calculated for the viewing time and start sequence 208, specified person 209, remote controller holder 210 and positional relation 211, and outputs the sum or product. If only one of these weights is utilized, the sum or product of these weights need not be calculated. Further, any other item that can represent a weight pertaining to viewing may be added.

Further, the calculating unit 308 calculates the sum or product of the weight value output from the position weight calculating unit 306 and the attribute weight value output from the attribute weight calculating unit 307.

Unless the parameters are selected on the basis of only the data about the specified person 209, the calculating unit 308 must calculate at least the position weight. In addition, the weight is calculated for each person with respect to each of the display parameters included in the display parameters 201 that determine the image. As a rule, weights are calculated for all persons (except for the case where the parameters are selected for the specified person 209 only).

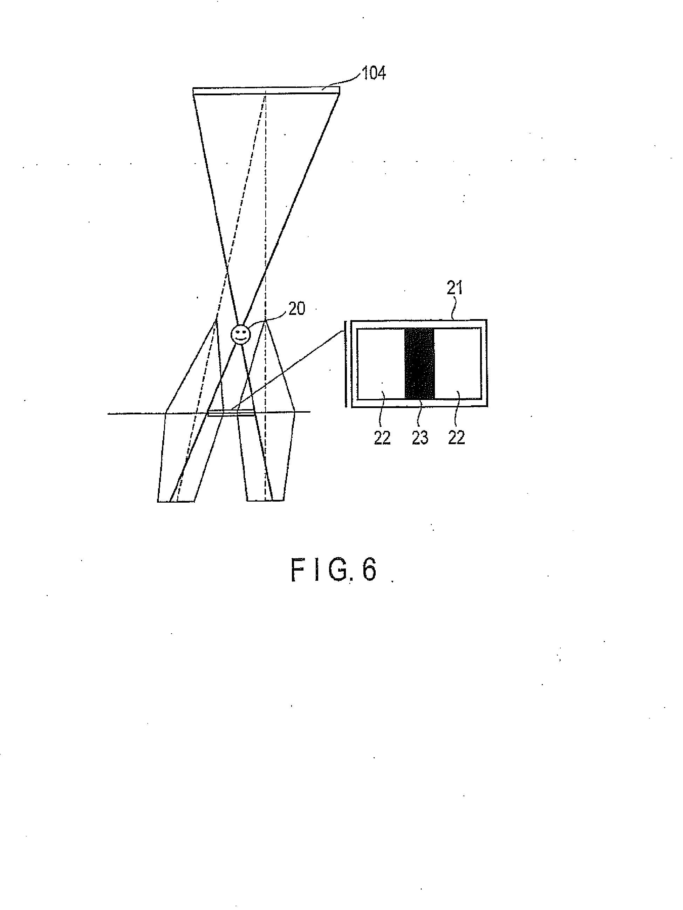

How weights are calculated from the area of the stereoscopic display area 205 will be explained with reference to FIG. 6. A "viewed state" can be geometrically found or calculated. The pattern 21 extracted at a view region setting distance by the two lines connecting a person 20 to the two edges of the image displaying unit (display) 104, is identical to the "viewed state." In the case shown in FIG. 6, the parts 22 of the pattern 21 are regions in which no stereoscopic views can be seen. The ratio of these parts 22 to the entire pattern 21 can be calculated as a weight. The ratio of the parts 22 may be, for example, 100%. In this case, the entire pattern 21 is seen as a stereoscopic image, and the weight calculated has the maximum value of, for example, "1."

How weights are calculated from the area of the light beam density 206 will be explained. The weight of the light beam density 206 can be calculated by the following equation:

$$L = 2Z \tan(\theta)$$

$$w_{ray}(z) = \begin{cases} 1 & if \quad z < \dfrac{dN}{2\tan(\theta)} \\ \dfrac{d}{L/N} & othewise \end{cases} \quad (1)$$

where N is the parallax number, $2\theta$ is the diversion angle of the light beam, Z is the distance from the display 104 to the person 20, and d is the inter-eye distance of the person 20.

That is, the ratio of the width len of the light beam to the inter-eye distance d is regarded as the weight of the light beam density 206. If the width len of the light beam is smaller than the inter-eye distance d, the weight of the light beam density 206 will be set to the value of "1."

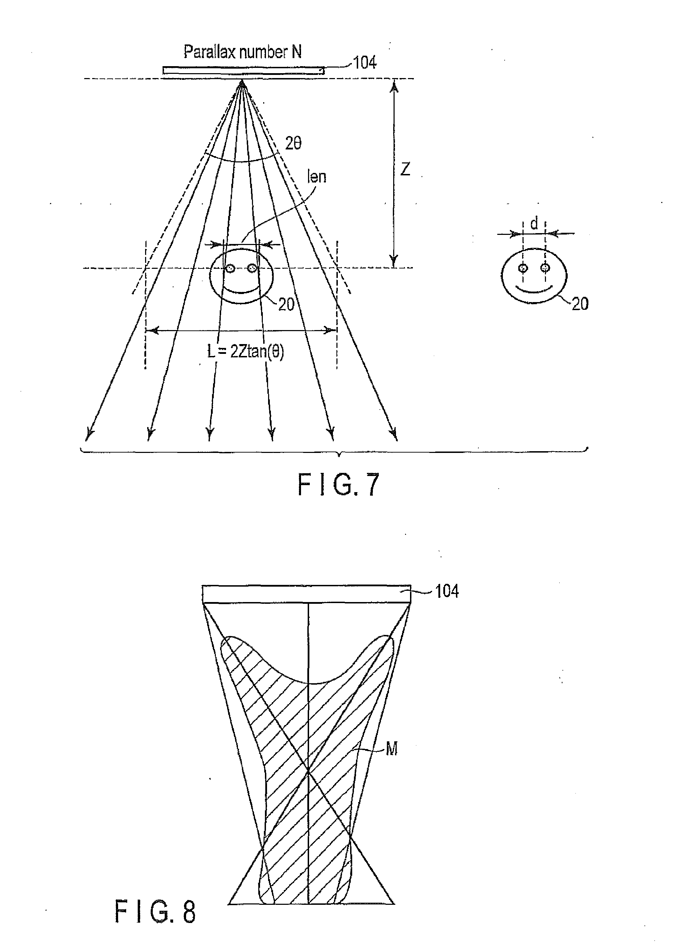

FIG. 8 shows an exemplary weight map M, in which the weight value calculated by the calculated by the weight calculating unit 102 are distributed in the real-space coordinates.

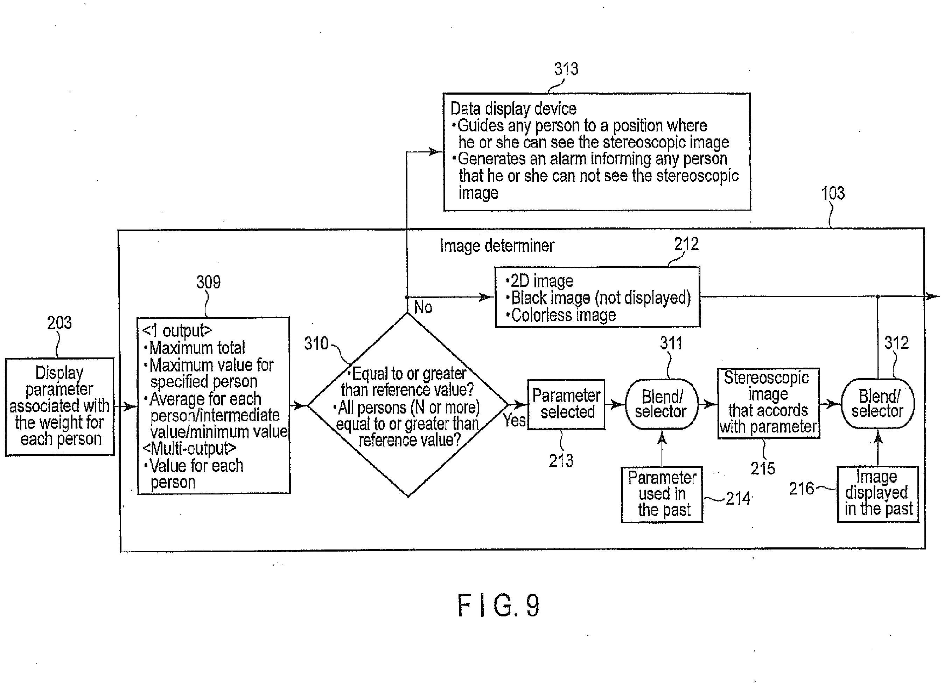

FIG. 9 shows the configuration of the image determining unit 103. The image determining unit 103 receives the weight of each person, output from the weight calculating unit, and also the display parameter 203 associated with this weight. The weight of each person and the display parameter may be either a single output or a plurality of outputs. It the image determining unit 103 receives a single output, the output may be the maximum total value of weights for each person, the maximum value for the specified person, or the average value or intermediate value for each person, which is greater than the other. Alternatively, different priorities may be allocated to the viewers in accordance with their attribute weights, and the maximum value of the total weight for the viewers having priorities higher than a specific value, or the average or intermediate value of the weights for the viewers, which is greater than the other.

The decision unit 310 of the image determining unit 103 determines whether the weight described above is equal to or greater than a prescribed reference value. If the decision unit 310 receives a plurality of outputs, it determines whether the weights of all viewers (or N viewer or more viewers) are equal to or greater than the reference value. Instead, different priorities may be allocated to the viewers in accordance with their attribute weights, and the decision unit 310 may determine whether the weights of only the viewers having priorities are higher than a particular value. In either case, a display parameter 213 associated with any weight equal to or greater than the reference value is selected. In order to increase the visibility at the time of switching the image, the display parameter selected this time is slowly blended with the display parameter 214 used in the past, gradually changing the display parameter on the basis of the display parameter 214. The image determining unit 103 may have a blend/section unit 311 that switches images if the scene changes so fast or the image moves so fast that the change can hardly be recognized. In order to enhance the visibility at the time of switching the image, the image determining unit 103 may further have a blend/selection unit 312 that blends a multi-viewpoint image (stereoscopic image) 215 with an image 216 displayed in the past, thereby slowing changing the scene. In the process of blending the images, it is desired that a primary delay should be absorbed.

Alternatively, the presentation of the multi-viewpoint image (stereoscopic image) that accords with the selected display parameter can be achieved by physically changing the position or orientation of the display 104 as will be described later.

If the weight determined by the decision unit 310 of the image determining unit 103 has a value smaller than the reference value, an image 212, such as a two-dimensional image, monochromic image, black image (not displayed) or colorless image, will be displayed (that is, a 2D image is displayed), in order not to display an inappropriate stereoscopic image. The 2D image will be displayed if the total sum of weights is too small, if some of the viewers are unable to see the stereoscopic image, or if the visibility is too low for the specified person. In this case, the image determining unit 103 may further have a data display unit 311 that guides any person to a position where he or she can see the stereoscopic image or generates an alarm informing any person that he or she can not see the stereoscopic image.

The controls achieved by the display parameter 201 that determine an image will be explained. Some of the display parameters control the view region, and the other display parameters control the light beam density. The parameters for controlling the view region are the image shift, the pixel pitch, the gap between each lens segment and the pixel associated therewith, and the rotation, deforming and motion of the display. The parameters for controlling the light beam density are the gap between the each lens segment and the pixel associated therewith and the parallax number.

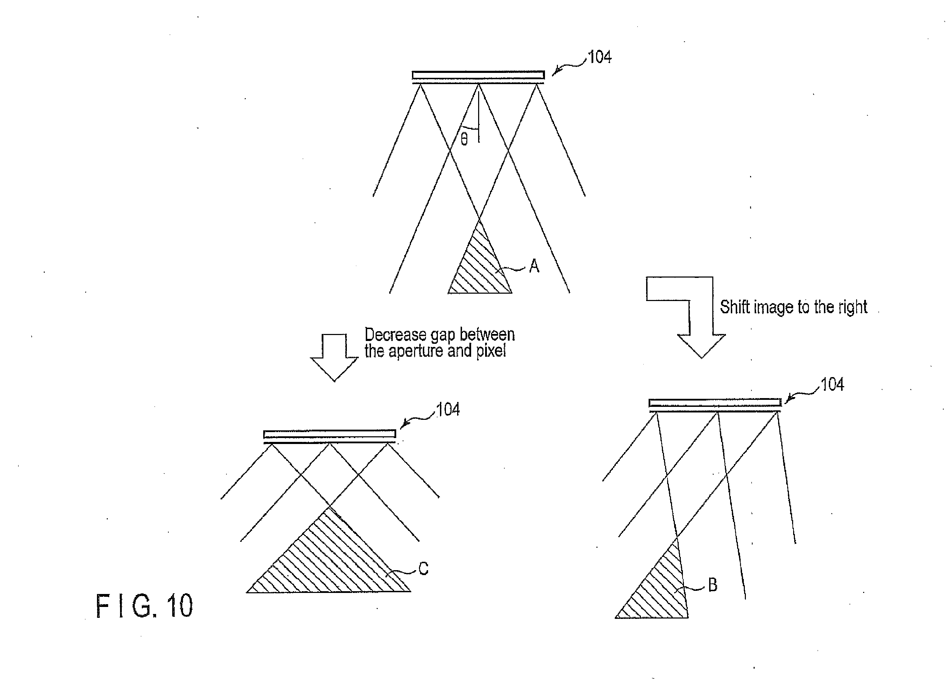

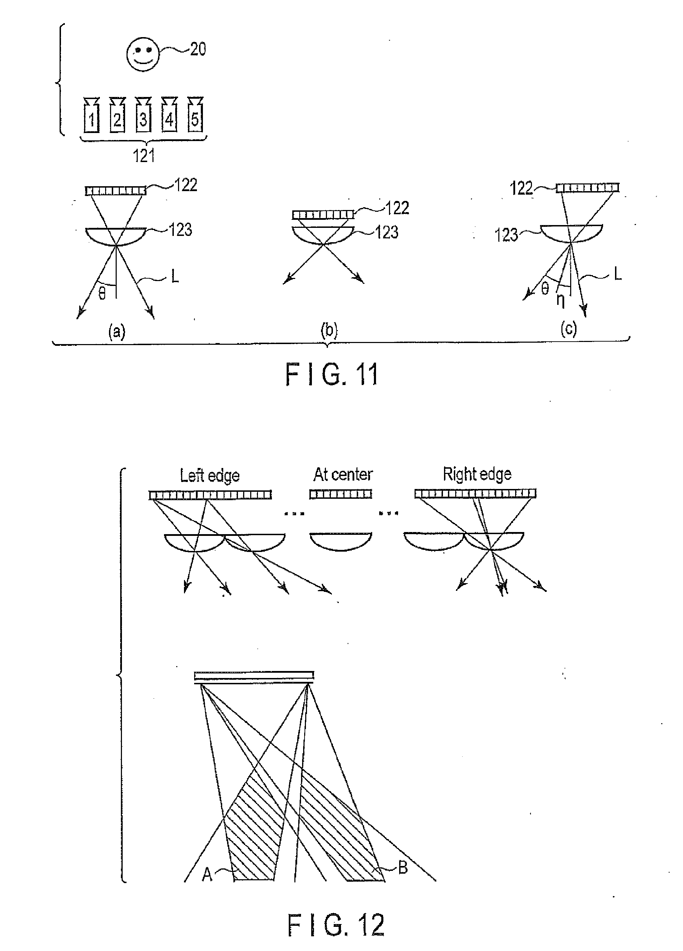

The display parameters for controlling the view region will be explained with reference to FIG. 10 and FIG. 11. If the image displayed is shifted to, for example, the right, the "view region," i.e., region where the stereoscopic image can be seen well, will move from region A to region B, as shown in FIG. 10. As seen from the comparison items (a) and (c) shown in FIG. 11, the view region shifts to the left, or moves to region B, because the light beam L shifts to the left as shown at item (c).

If the gap between the pixel 22 and the lens/slit 23 (optical aperture 116) is shortened, the view region will move from region A to region C, as can be understood by comparing items (a) and (b) shown in FIG. 11. In this case, the light beam density decreases, though the view region gets nearer.

As shown in FIG. 11, parallax images are sequentially arranged at the pixels 22 of the display in a specific order. The parallax images are images, each deviating from the view point. They are equivalent to the images of a person 20, photographed with a plurality of cameras 21, respectively, as shown in FIG. 11. The light beam emerging from the pixel 22 (sub-pixel 140) emerges, passing through the lens/slit 23 (optical aperture 116). The shape of the view region can be geometrically determined, by using angles $\mu$ and $\eta$ shown in FIG. 11.

The adjacent view regions will be explained with reference to FIG. 12. The view region B adjacent to view region A in which the image is viewed is defined by the left pixel and the lens on the right side of the leftmost lens and the pixel and by the right pixel and the lens on the left side of the rightmost lens. The view region B can be further shifted to the left or the right.

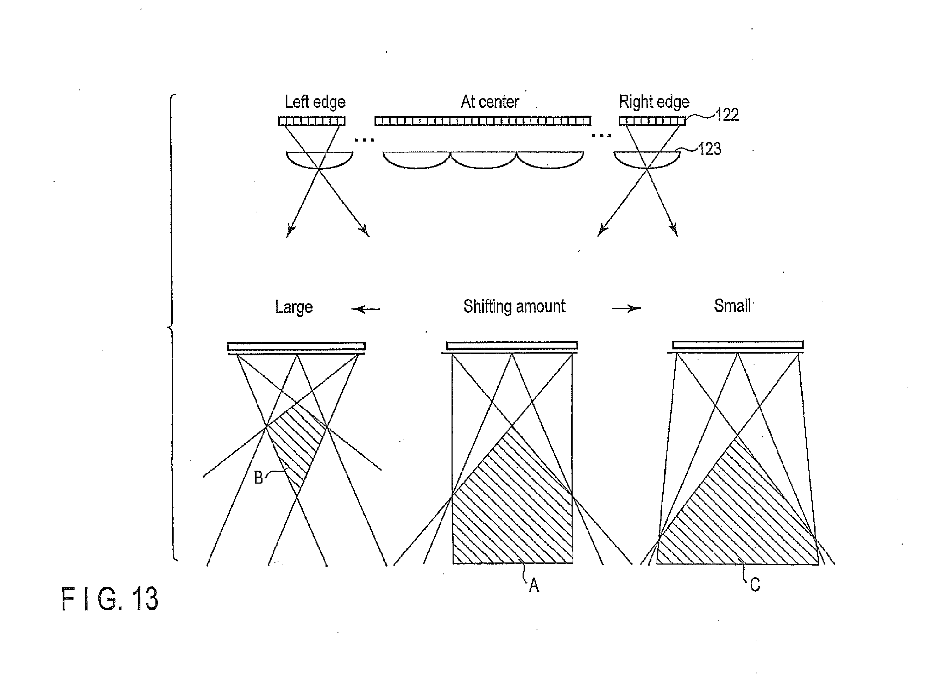

How a control is performed in accordance with a pixel arrangement (pixel pitch) will be explained with reference to FIG. 13. At either edge (i.e., left edge or right edge) of the screen, the view region can be better controlled by shifting the pixel 22 and the lens 23 relative to each other. If the pixel 22 and the lens 23 are much shifted relative to each other, the view region will change from view region A to the view region B as shown in FIG. 13. Conversely, if the pixel 22 and the lens 23 are shifted relative a little to each other, the view region will change from view region A to the view region C as shown in FIG. 13. The width and nearness of the view region can thus be controlled in accordance with the display parameter related to the pixel arrangement (pixel pitch). The distance at which the view region is broadest shall be called "view-region setting distance."

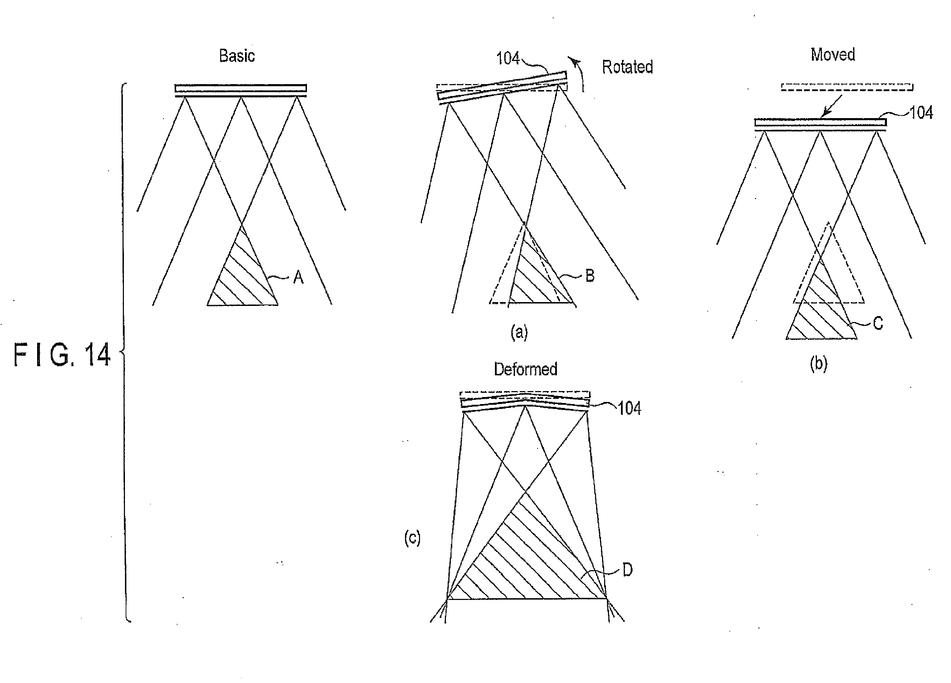

How the view region is controlled by moving, rotating or deforming the image displaying unit will be explained with reference to FIG. 14. As shown in item (a) of FIG. 14, the basic view region A can be changed to view region B by rotating the image displaying unit 104. Similarly, the basic view region A can be changed to view region C by moving the image displaying unit 104, and to view region D by deforming the image displaying unit 104. Thus, the view region can be controlled by moving, rotating or deforming the image displaying unit 104, thereby controlling the view region.

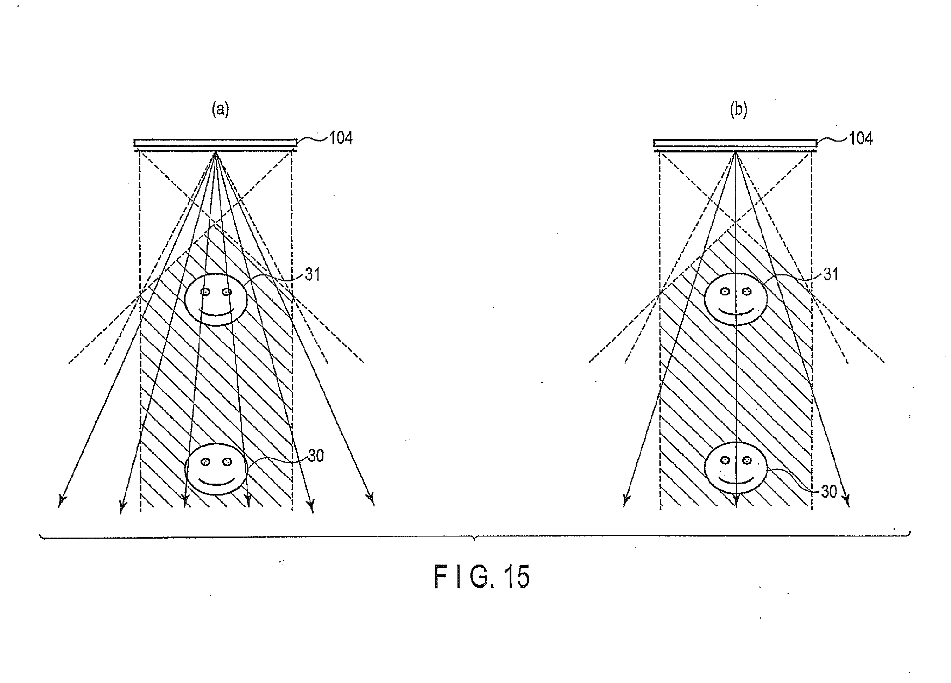

With regard to the display parameters controlled in connection with the light beam density, how the light beam density changes in accordance with the parallax number will be explained with reference to FIG. 15.

If the parallax number is 6 as shown in item (a) of FIG. 15, the person 31 closer to the display 104 than the person 30 receives more light beams and can therefore see a better stereoscopic image than the person 30. If the parallax number is 3 as shown in item (b) of FIG. 15, reducing the light beam density, the person 31 receives less light beams than in the case shown in item (a) of FIG. 15 so long as the person remains at the same distance from the display 104. The density of the light beams emitted from each pixel of the display 104 can be calculated from the angle $\theta$

determined by the lens and the gap, the parallax number and the position of the person.

While certain embodiments of the invention have been described, these embodiments have been presented by way of example only, and are not intended to limit the scope of the inventions. These novel embodiments can be reduced to practice in other various forms. Various omissions, substitutions and changes can be made, without departing from the spirit of the inventions. The accompanying claims and their equivalents are intended to cover such forms or modifications as would fall within the scope and spirit of the inventions.

**Claims**

1. An apparatus for displaying a stereoscopic image, comprising:

   a person data acquiring unit configured to acquire person data including a position of each of persons who are viewing a stereoscopic image;
   a weight calculating unit configured to calculate a weight from the person data and display parameters, the weight representing a stereoscopic degree inferred, for each of the persons, from a multi-viewpoint image displayed in accordance with the display parameters;
   an image determining unit configured to select the display parameter that maximizes a total sum of the weights calculated of the persons and to output a multi-viewpoint image that accords with the display parameters selected; and
   an image displaying unit configured to display the multi-viewpoint image output from the image determining unit.

2. The apparatus according to claim 1, wherein the weight calculating unit calculates a weight that accords with the area of a stereoscopic view region at the position of each person.

3. The apparatus according to claim 1, wherein the weight calculating unit calculates a weight that accords with the density of light beams at the position of each person, the light beam having been emitted from each pixel of the image displaying unit.

4. The apparatus according to claim 1, wherein the weight calculating unit calculates a first weight that accords with the area of a stereoscopic view region at the position of each person and a second weight that accords with the density of light beams at the position of each person, and calculates the weight for each person by performing an operation on the first weight and the second weight.

5. The apparatus according to claim 4, wherein the weight calculating unit calculates the weight for each person by performing addition or multiplication on the first weight and the second weight.

6. The apparatus according to any one of claims 2 to 4, wherein the person data acquiring unit further acquires identification data about each person, and the weight calculating unit calculates a weight that accords with the position of each person and the identification data.

7. The apparatus according to any one of claims 2 to 4, wherein the image determining unit outputs a 2D image if the total sum of the weights is not equal to or greater than a reference value.

8. The apparatus according to claim 1, wherein the display parameters include a parameter that changes the arrangement of pixels of the multi-viewpoint image to display at the image displaying unit.

9. A method for displaying a stereoscopic image, comprising:

   acquiring person data including a position of each of persons who are viewing a stereoscopic image;
   calculating a weight from the person data and display parameters, the weight representing a stereoscopic degree inferred, for each of the persons from, a multi-viewpoint image displayed in accordance with the display parameters;
   selecting the display parameter that maximizes a total sum of the weights calculated of the persons and outputting a multi-viewpoint image that accords with the display parameters selected; and
   displaying the multi-viewpoint image so output.

10

Stereoscopic image display apparatus

| Person data acquirer | ~101 |

| Weight calculator | ~102 |

| Image determiner | ~103 |

| Image displaying device | ~104 |

F I G. 1

FIG.2

FIG. 3

FIG. 4

FIG. 5

102 Weight calculator

201 Group of parameters determining the image

200 Person position
202a
202b Person attribute

306 Position weight calculator
205 Stereoscopic display area
206 Light beam density
207 Position weight

307 Attribute weight calculator
208 Viewing time/start sequence
209 Specified person
210 Remote controller holder
211 Positional relation of persons

300
308 Calculator (addition/multiplication)
203 Parameter associated with the weight of a person

11

F I G. 6

Parallax number N — 104

$2\theta$

len

$Z$

20

$L = 2Z\tan(\theta)$

$d$

20

FIG. 7

104

M

FIG. 8

FIG. 9

F I G. 10

F I G. 11

F I G. 12

EP 2 495 984 A1

Left edge    At center    Right edge    122

123

Large ← Shifting amount → Small

B

A    C

# FIG. 13

F I G. 14

FIG. 15

## INTERNATIONAL SEARCH REPORT

| | International application No. |
|---|---|
| | PCT/JP2010/070815 |

A. CLASSIFICATION OF SUBJECT MATTER
*H04N13/04*(2006.01)i, *G02B27/22*(2006.01)i, *G09G5/00*(2006.01)i, *G09G5/36*
(2006.01)i

According to International Patent Classification (IPC) or to both national classification and IPC

B. FIELDS SEARCHED

Minimum documentation searched (classification system followed by classification symbols)
H04N13/04, G02B27/22, G09G5/00, G09G5/36

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 08-328170 A (NEC Corp.), 13 December 1996 (13.12.1996), entire text; all drawings (Family: none) | 1-9 |
| A | JP 03-089794 A (Nippon Telegraph And Telephone Corp.), 15 April 1991 (15.04.1991), entire text; all drawings (Family: none) | 1-9 |
| A | JP 2001-319217 A (Fuji Photo Film Co., Ltd.), 16 November 2001 (16.11.2001), entire text; all drawings & US 2002/0046100 A1 & US 2005/0114231 A1 | 1-9 |

| ☒ | Further documents are listed in the continuation of Box C. | ☐ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 January, 2011 (19.01.11) | 01 February, 2011 (01.02.11) |

| Name and mailing address of the ISA/ Japanese Patent Office | Authorized officer |
|---|---|
| Facsimile No. | Telephone No. |

Form PCT/ISA/210 (second sheet) (July 2009)

20

**INTERNATIONAL SEARCH REPORT**

International application No.

PCT/JP2010/070815

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-077234 A (Toshiba Corp.),<br>09 April 2009 (09.04.2009),<br>entire text; all drawings<br>& US 2009/0079733 A1 & EP 2040478 A2<br>& CN 101394572 A | 1-9 |

Form PCT/ISA/210 (continuation of second sheet) (July 2009)

**EP 2 495 984 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8328170 A